# EUROPÄISCHE PATENTANMELDUNG

(11) **EP 2 495 915 A1**
(43) Veröffentlichungstag der Anmeldung: **05.09.2012**
(21) Anmeldenummer: 11001662.3
(22) Anmeldetag: 01.03.2011
(51) Int. Cl.: H04L 12/40, G05B 19/418

(54) **Konverter für den Anschluss eines ein analoges 4...20mA-Messsignal erzeugenden Feldgerätes an einen Feldbus**

(71) Anmelder: VEGA Grieshaber KG, 77709 Wolfach (DE)
(72) Erfinder: Schätzle, Ralf, 77716 Fischerbach (DE)
(74) Vertreter: Patentanwälte Westphal, Mussgnug & Partner

(57) **Zusammenfassung**

Die Erfindung betrifft einen Konverter (1) für den Anschluss eines ein analoges 4...20mA-Messsignal erzeugenden Feldgerätes (2) an einen wenigstens einen Master (3) aufweisenden Feldbus (13), auf dem Informationen mittels eines Feldbusprotokolls übertragen werden, wobei der Konverter (1) einen A/D-Wandler (5) zum Digitalisieren des 4...20mA-Messsignals aufweist und ein Feldbus-Modem (6) vorgesehen ist, welches zur Umsetzung des digitalisierten 4...20mA-Messsignals in das Feldbusprotokoll von einem Mikroprozessor (4) gesteuert wird.

## Beschreibung

Die Erfindung betrifft einen Konverter für den Anschluss eines ein analoges 4...20mA-Messsignal erzeugenden Feldgerätes an einen wenigstens einen Master aufweisenden Feldbus gemäß Oberbegriff des Patentanspruchs 1.

Konventionell werden in der Mess- und Regelungstechnik, bspw. in industriellen Automatisierungsanlagen der Verfahrenstechnik, der Automobilindustrie und dgl. Sensoren und Aktoren über ein analoges 4...20mA-Signal mit einer Steuerung oder Auswerteeinheit verbunden. Für jede Verbindung zwischen Sensor oder Aktor und der Steuerung ist bei dieser Technik ein 2-adriges Kabel notwendig.

In einem Feldbussystem mit über den diesen Feldbus kommunizierenden Feldgeräten, wie Sensoren, Messgeräte usw. lassen sich hingegen über den digitalen Bus Informationen bidirektional austauschen. Neben den eigentlichen Prozessdaten wie Messwerte (z.B. Temperatur und Druck) und Steuergrößen (z.B. Drehzahl) können auch Parameter wie Messbereich, Messeinheit etc. übertragen werden.

HART (Highway Addressable Remote Transducer) ist ein standardisierten Kommunikationssystem zum Aufbau industrieller Feldbusse, welches eine digitale Kommunikation der angeschlossenen HART-fähigen Feldgeräte ermöglicht. Bei der HART-Kommunikation werden Feldgeräte konventionell über 4...20mA-Stromschleifen (Normsignal) verbunden bzw. an Auswertegeräte und Steuerungen mit solchem Normsignalausgang angeschlossen. Über das Normsignal werden bspw. Messwerte von Sensoren als Feldgeräte übertragen. Neben der Signalübertragung dienen diese Stromsignale bei der 2-Leiter Technik als Energieversorgung der Feldgeräte. Diesem analogen 4...20mA-Signal wird im FSK Verfahren (Frequency Shift Keying) ein digitales Signal aufmoduliert. Somit können zusätzlich Mess-, Stell- und Gerätedaten übertragen werden, ohne das Analogsignal zu beeinflussen.

Auswertegeräte, welche solche digitalen HART-Signale auswerten können, haben den Vorteil, dass bspw. im Multidrop-Betrieb gleichzeitig mehrere Zweileitersensoren als Feldgeräte angeschlossen werden können. In diesem Multidrop-Betrieb tauschen die Feldgeräte ihre Daten und Messwerte ausschließlich über das HART-Protokoll aus, wobei das Analogstromsignal nur noch zur Energieversorgung der Zweileitersensoren dient und hierzu ein konstanter Strom von 4 mA eingeprägt wird.

Nachteilig an solchen Auswertegeräten mit einem HART-Anschluss ist jedoch, dass keine Feldgeräte, also insbesondere Messgeräte oder Sensoren angeschlossen werden können, die lediglich ein analoges 4...20mA-Signal als Messsignal liefern.

Es ist Aufgabe der vorliegenden Erfindung, eine digitale Kommunikation eines ein analoges 4...20mA-Messsignal erzeugendes Feldgerät, wie Sensoren oder Messgeräte auf einem Feldbus, auf dem Information mit dem zugehörigen Feldbusprotokoll übertragen werden, zu ermöglichen.

Diese Aufgabe wird gelöst durch einen Konverter mit den Merkmalen des Patentanspruchs 1.

Ein solcher Konverter für den Anschluss eines ein analoges 4...20mA-Messsignal erzeugenden Feldgerätes an einen wenigstens einen Master aufweisenden Feldbus, auf dem Informationen mittels eines Feldbusprotokolls übertragen werden, zeichnet sich dadurch aus, dass der Konverter einen A/D-Wandler zum Digitalisieren des 4...20mA-Messsignals aufweist und ein Feldbus-Modem vorgesehen ist, welches zur Umsetzung des digitalisierten 4...20mA-Messsignals in das Feldbusprotokoll von einem Mikroprozessor gesteuert wird.

Mit einem solchen Konverter können einfache analoge Sensoren oder Messgeräte als Feldgeräte an einen digitalen Feldbus angeschlossen werden, so dass deren auf das Feldbusprotokoll umgesetzte analoge 4...20mA-Messsignale auf dem Feldbus zur Verfügung gestellt werden kann, wobei vorzugsweise der Mikroprozessor des Konverters das Feldbus-Modem derart steuert, dass sich der Konverter am Feldbus als Slave verhält. Damit ist es möglich, dass nicht nur das auf das Feldbusprotokoll umgesetzte 4...20mA-Messsignals mittels dieses Feldbusprotokolls am Ausgang des Konverters abfragbar ist, sondern auch Parameter des Feldgerätes, wie bspw. Messbereich und Messeinheit. Insbesondere bietet es sich dabei an, den Master als Auswerte- und Anzeigeeinheit zur Auswertung und Anzeige des in das Feldbusprotokoll umgesetzte 4...20mA-Messsignals auszubilden.

Eine vorteilhafte Ausgestaltung der Erfindung schlägt vor, eine mit dem Mikroprozessor verbundene Bedienschnittstelle vorzusehen, über die das analoge Feldgerät parametriert werden kann, insbesondere Messbereich und Messeinheit des Feldgerätes. Auch ist es möglich, die HART-Adresse, die am Hart-Ausgang des Konverters, also am Ausgang des Feldbus-Modems zur Verfügung steht zu parametrieren.

Gemäß einer Weiterbildung der Erfindung kann eine solche Bedienschnittstelle als Gerätebedieneinheit mit Display und Eingabetastatur ausgebildet werden. Des Weiteren ist es auch vorteilhaft, die Bedienschnittstelle als Anschluss für einen Personalcomputer (PC) auszubilden.

Gemäß einer Ausgestaltung der Erfindung ist für die Energieversorgung des Konverters eine externe Energiequelle vorgesehen. Ferner wird weiterbildungsgemäß vorgeschlagen, den Konverter mit einer Energiequelle auszustatten, welche das Feldgerät über seine Verbindungsleitung mit dem Konverter mit Energie versorgt.

Schließlich ist in einer besonders vorteilhaften Ausgestaltung vorgesehen, als Feldbusprotokoll das HART(Highway Addressable Remote Transducer)-Protokoll zu verwenden. Damit ist es möglich, mit einem erfindungsgemäßen Konverter das analoge 4...20mA-Messsignal eines Feldgerätes, wie Sensor oder Messgerät in ein digitales HART-Signal umzuwandeln, so dass solche einfache analoge Sensoren oder Messgeräte als Feldgeräte an ein Auswertegerät mit HART-Eingang angeschlossen werden können.

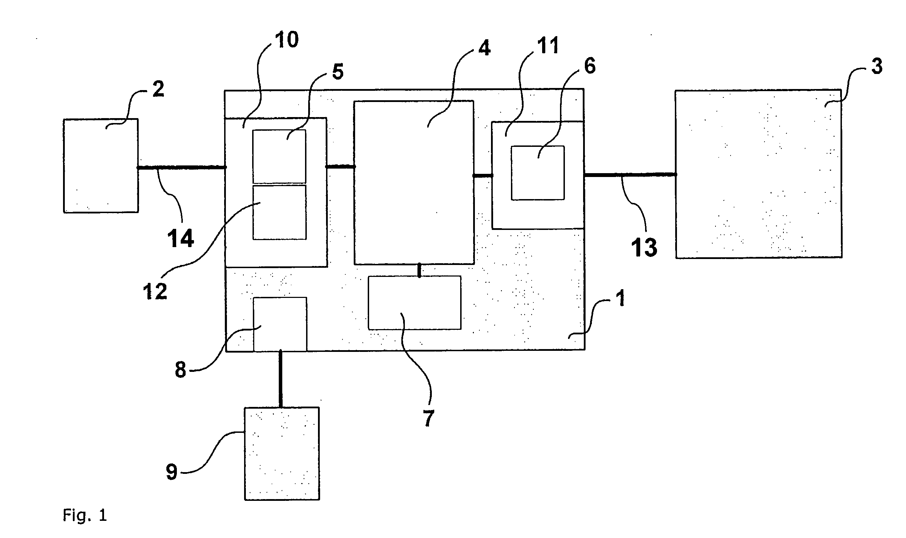

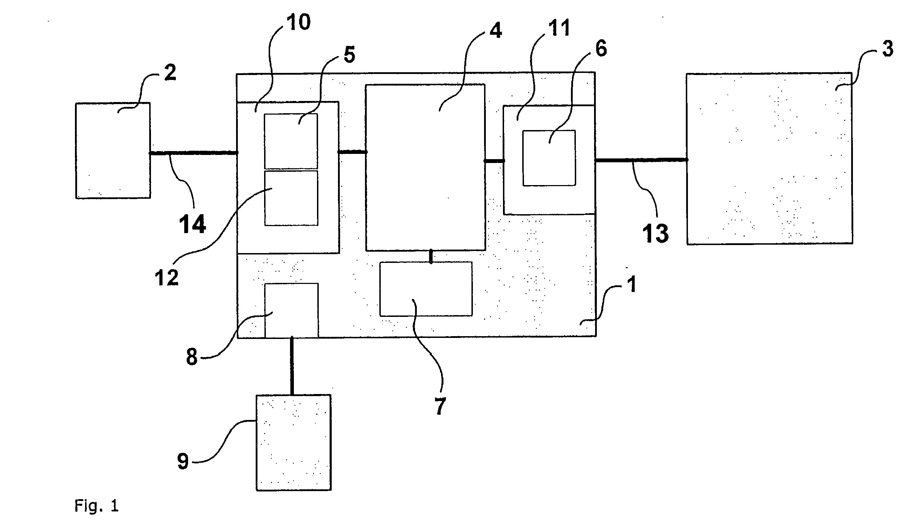

Die Erfindung wird nachstehend anhand eines Ausführungsbeispiels unter Bezugnahme auf eine einzige Figur ausführlich beschrieben. Diese Figur 1 zeigt ein Blockschaltbild einer Anordnung aus einem erfindungsgemäßen Konverter, einem Feldgerät und einem Auswertegerät als Ausführungsbeispiel der Erfindung.

Gemäß Figur 1 verbindet ein ausführungsbeispielgemäßer Konverter 1 ein Feldgerät 2, welches ein analoges 4...20mA-Messsignal erzeugt, mit einer Busleitung 13, die an ein als Master ausgebildetes HART-fähiges Auswertegerät 3 angeschlossen ist. Unter der Eigenschaft "Hart-fähig" wird die Kommunikationsfähigkeit eines Gerätes mittels eines HART-Protokolls verstanden. Dieses Feldgerät 2 stellt ein Sensor oder ein Messgerät zur Erfassung einer physikalischen Größe, wie Temperatur, Druck usw. dar.

Das von dem Feldgerät 2 erzeugte 4...20mA-Messsignal wird über eine 2-Drahtleitung 14 einem Eingang 10 des Konverters 1 zugeführt. Ein solcher Zweileitersensor 2 wird von einer Energiequelle 12 des Konverters 1 über diese 2-Drahleitung 14 mit Energie versorgt.

Auch die einen Ausgang 11 des Konverters 1 mit dem masterfähigen Auswertegerät 3 verbindende Bus-Leitung 13 ist als 2-Drahtleitung ausgebildet und stellt bspw. ein HART-Kabel dar. Der Konverter 1 wird von einer externen Energiequelle 9 mit Energie versorgt, die an einen Anschluss 8 angeschlossen ist.

Der Konverter 1 umfasst einen A/D-Wandler 5, welcher das am Eingang 10 anliegende analoge 4...20mA-Messsignal des Sensors 2 in ein digitales Messsignal umwandelt. Dieses digitale Messsignal wird einem Mikroprozessor 4 des Konverters 1 zugeführt, der ein diesem Mikroprozessor 4 nachgeschaltetes HART-Modem 6 einerseits so ansteuert, dass sich der Konverter 1 in Richtung des Auswertegerätes 3 wie ein HART-Slave verhält, d. h. aus Sicht dieses Auswertegerätes 3 ein HART-fähiger Sensor darstellt und andererseits das digitalisierte 4...20mA-Messsignal in das HART-Protokoll umsetzt, so dass am Ausgang 11 des Konverters 1 das digitalisierte 4...20mA-Messsignal als HART-Variable zur Verfügung steht, die mittels des HART-Protokolls vom Auswertegerät 3 abgefragt werden kann.

Damit wird im einfachsten Fall der digitalisierte Messwert in der Einheit mA übertragen, d. h. das Auswertegerät 3 bekommt in der HART-Variablen den am A/D-Wandler 5 anliegenden analogen Stromwert als Digitalwert geliefert. Vom Auswertegerät 3 können noch zusätzlich Informationen zum Messwert mittels des HART-Protokolls abgefragt werden, bspw. Informationen zum Messbereich oder zur Messeinheit oder Informationen zur Identifikation des Sensors 2.

Am Konverter können über eine mit dem Mikroprozessor 4 angeschlossene Bedienschnittstelle 7 Zusatzinformationen wie Messbereich und Messeinheit parametriert, also diese Parameter eingestellt werden, so dass der Konverter 1 die Messinformationen passend zum angeschlossenen Sensor 2 bereitstellen kann. So wird durch Eingabe der zum angeschlossenen Sensor 2 passenden Parameter über die Bedienschnittstelle 7 der digitale Messwert nicht nur als Stromwert von dem Mikroprozessor 4 übertragen, sondern als den vom Sensor 2 physikalisch gemessenen Wert, also bspw. als Temperatur-, Druck- oder Distanzwert. Dazu gibt bspw. der Anwender die physikalischen Werte, die dem 4mA- und 20mA-Stromwert des Sensors 2 entsprechen über die Bedienschnittstelle 7 ein, wodurch der Mikroprozessor 4 anhand der gespeicherten Informationen den gemessenen Sensorstromwert in den physikalischen Sensorwert umwandelt. Schließlich ist es auch möglich, die HART-Adresse, die am Ausgang 11 des Konverter 1, als HART-Ausgang verwendet wird, zu parametrieren.

Die Bedienschnittstelle 7 kann als Geräteeinheit, bestehend aus einer Tastatur und einem Display oder als Schnittstelle für den Anschluss eines PCs ausgebildet sein. Ferner können die Parameter in dem Konverter 1 auch über den Ausgang 11 des Konverters 1, die eine HART-Schnittstelle darstellt, durch einen HART-Master, z. Bsp. einem HART-Handheld parametriert werden. Die Funktion eines solchen HART-Masters kann auch von dem Auswertegerät 3 übernommen werden.

Handelt es sich bspw. bei dem angeschlossenen analogen Sensor 2 um einen Temperatursensor, der eine Temperatur von -50° bis 250° als 4...20mA-Messsignal abbildet, wird der HART-Ausgang 11 des Konverters 1 so parametriert, dass als digitales Ausgangsganssignal der Temperaturwert einschließlich Messbereich und Messeinheit im HART-Protokoll geliefert wird. Ohne eine Parametrierung wird als Default-Wert am HART-Ausgang 11 der von dem Sensor 2 gemessene Sensorstromwert als Digitalwert im HART-Protokoll bereitgestellt, wobei als Messbereich und Messeinheit 4...20mA geliefert wird. Damit ist es auch möglich, ohne eine spezielle Parametrierung sofort den analogen Sensorstromwert mittels des HART-Protokolls durch die Auswerteinheit 3 am Ausgang 11 des Konverters 1 abzurufen.

Handelt es sich bei dem Sensor 2 dagegen um eine Drucksensor, liefert dieser einen Sensorstrom von 4...20mA, der einem Druck von 0...10bar entspricht. Im Konverter 1 wird der Messbereich mit 0...10bar parametriert. Liefert ein solcher Sensor 2 einen Sensorstrom von 12 mA, wird dieser im Konverter 1 durch den Mikroprozessor 4 in einen physikalischen Sensorwert von 5 bar umgewandelt und am Ausgang 11 dem Auswertegerät 3 mittels HART-Protokoll zur Verfügung gestellt.

Da das HART-Protokoll bis zu vier HART-Variablen (Messwerte) vorsieht, die vom HART-Master, also bspw. von dem Auswertegerät 3 abgerufen werden können, ist es auch möglich den Sensorwert noch in anderen Einheiten zur Verfügung zu stellen. So könnte der Konverter 1 für den im Beispiel genannten Drucksensor zusätzlich zum physikalischen Druckwert als weitere HART-Variablen noch den gemessenen Stromwert und durch Eingabe der entsprechenden Parameter (Dichte usw.) den höhenproportionalen Messwert bereitstellen.

Statt nur einen einzigen analogen Sensor 2 an den Konverter 1 anzuschließen, kann der Konverter 1 auch mit mehreren analogen Eingängen 10 ausgebildet werden. Der Konverter 1 kann dann so parametriert werden, dass er sich in Richtung Auswertgerät 3 unter verschiedenen HART-Adressen meldet, d.h. der erste analoge Eingang 1 wird auf die HART-Adresse 1 abgebildet, der analoge Eingang 2 auf die HART-Adresse 2 usw. Für jeden der analogen Eingänge kann eine separate Parametrierung vorgenommen werden (Messbereich, Identifikation, usw). Dadurch ist es möglich, mit einem Konverter 1 mehrere analoge Sensoren an ein Auswertgerät 3 anzuschließen, ohne dass für jeden Sensor ein separater Konverter vorgesehen werden muss.

Schließlich kann der Konverter 1 auch ohne die externe Energieversorgung 9 ausgebildet werden, wenn das Auswertgerät 3 die entsprechende Energie über die HART-Zweidrahtleitung 13 dem Konverter 1 zur Verfügung stellt.

### Bezugszeichenliste

- 1: Konverter
- 2: Feldgerät, Sensor, Messgerät
- 3: Master, Auswertegerät
- 4: Mikroprozessor
- 5: A/D-Wandler
- 6: Feldbus-Modem, HART-Modem
- 7: Bedienschnittstelle
- 8: Anschluss für externe Energiequelle 9
- 9: Externe Energiequelle
- 10: Eingang des Konverters 1
- 11: Ausgang Konverter, HART-Ausgang des HART-Modems 6
- 12: Energieversorgungsquelle für Feldgerät 1
- 13: Feldbus, HART-Bus
- 14: Verbindungsleitung

## Patentansprüche

1. Konverter (1) für den Anschluss eines ein analoges 4...20mA-Messsignal erzeugenden Feldgerätes (2) an einen wenigstens einen Master (3) aufweisenden Feldbus (13), auf dem Informationen mittels eines Feldbusprotokolls übertragen werden, wobei der Konverter (1) einen A/D-Wandler (5) zum Digitalisieren des 4...20mA-Messsignals aufweist und ein Feldbus-Modem (6) vorgesehen ist, welches zur Umsetzung des digitalisierten 4...20mA-Messsignals in das Feldbusprotokoll von einem Mikroprozessor (4) gesteuert wird.

2. Konverter (1) nach Anspruch 1,
**dadurch gekennzeichnet, dass**
der Mikroprozessor (4) das Feldbus-Modem (6) derart steuert, dass sich der Konverter (1) am Feldbus (13) als Slave verhält.

3. Konverter (1) nach Anspruch 1 oder 2,
**dadurch gekennzeichnet, dass**
der Master (3) als Auswerte- und Anzeigeeinheit zur Auswertung und Anzeige des in das Feldbusprotokoll umgesetzte 4...20mA-Messsignals ausgebildet ist.

4. Konverter (1) nach einem der vorhergehenden Ansprüche,
**dadurch gekennzeichnet, dass**
eine mit dem Mikroprozessor (4) verbundene Bedienschnittstelle (7) vorgesehen ist, über die das Feldgerät (2) parametriert wird.

5. Konverter (1) nach Anspruch 4,
**dadurch gekennzeichnet, dass**
die Bedienschnittstelle (7) als Gerätebedieneinheit mit Display und Eingabetastatur ausgebildet ist.

6. Konverter (1) nach Anspruch 4,
**dadurch gekennzeichnet, dass**
die Bedienschnittstelle (7) als Anschluss für einen Personalcomputer ausgebildet ist.

7. Konverter (1) nach einem der vorhergehenden Ansprüche,
**dadurch gekennzeichnet, dass**
für die Energieversorgung des Konverters (1) eine externe Energiequelle (9) vorgesehen ist.

8. Konverter (1) nach einem der vorhergehenden Ansprüche,
**dadurch gekennzeichnet, dass**
der Konverter (1) eine Energiequelle (12) aufweist, welche das Feldgerät (2) über eine Verbindungsleitung (14) mit Energie versorgt.

9. Konverter (1) nach einem der vorhergehenden Ansprüche,
**dadurch gekennzeichnet, dass**
als Feldbusprotokoll das HART(Highway Addressable Remote Transducer)-Protokoll vorgesehen ist.
